# EUROPEAN PATENT APPLICATION

(11) **EP 4 329 165 A1**
(43) Date of publication of application: **28.02.2024**
(21) Application number: 23189733.1
(22) Date of filing: 04.08.2023
(51) Int. Cl.: H02K 9/197, H02K 9/20

(54) **COOLING END TURNS IN HIGH POWER DENSITY ELECTRIC GENERATORS**

(30) Priority: 24.08.2022 US 202217894943
(71) Applicant: Honeywell International Inc., Charlotte, NC 28202 (US)
(72) Inventor: ANGHEL, Cristian E., Charlotte 28202 (US); DAVIS, Toren S., Charlotte 28202 (US); PHIELIX, Tom, Charlotte 28202 (US)
(74) Representative: Lucas, Peter Lawrence

(57) **Abstract**

A manifold for cooling the end turns of stator coils of a generator is provided. The manifold includes a ring having a surface with a plurality of spray nozzles formed integral with the ring and extending from the surface. Each spray nozzle of the plurality of spray nozzles includes a channel having a diameter, and a surface having a selected width and an angle, wherein the channel and the surface are configured to spray oil on first end turns of the stator coils.

## Description

### BACKGROUND

During the last several years, the demand for systems that generate power in the 200kW to 1,000kW range (so-called "high power") has increased dramatically. Much of this demand is driven by the increased electrification in aerospace applications and hybrid electric propulsion for aerospace and ground vehicles. In addition to high power, low weight and volume are constraints that drive design considerations. Thus, high efficiency generators are used for high power applications to enable cooling of the generator with minimal weight and volume impact due to the cooling system.

Existing high efficiency generators have used oil cooling techniques for several decades. Typically, the generators are cooled with either spray-cooling, conduction cooling or a combination of both spray and conduction cooling. The spray cooling technique provides very good heat extraction, but it has the disadvantage that it increases the windage losses in the generator. This is caused by the oil being in contact with the rotor components that rotate at very high speeds.

For a megawatt class generator, a combination of conduction cooling of the rotor and stator back-iron, and spray-cooling of the stator end turns is very desirable. However, at these power levels and with the high frequency typical for a power dense generator, additional iron and copper losses make the traditional methods of heat extraction ineffective.

Thus, there is a need in the art for improved techniques for cooling high power density electric generators.

### SUMMARY

A manifold for cooling the end turns of stator coils of a generator is provided. The manifold includes a ring having a surface with a plurality of spray nozzles formed integral with the ring and extending from the surface. Each spray nozzle of the plurality of spray nozzles includes a channel having a diameter, and a surface having a selected width and an angle, wherein the channel and the surface are configured to spray oil on first end turns of the stator coils.

### DRAWINGS

Embodiments of the present invention can be more easily understood and further advantages and uses thereof more readily apparent, when considered in view of the description of the preferred embodiments and the following figures in which:
FIG. 1 is a perspective view of a stator for an electric generator with first and second manifolds for cooling the end turns of the stator coils of the stator according to one embodiment of the present invention.
FIG. 2A is a plan view in partial cross section that illustrates an embodiment of a spray nozzle on a manifold for use in cooling the end turns of stator coils in an electric generator.
FIG. 2B is a perspective view of a portion of one spray nozzle of FIG. 2A.
FIG. 3A is a perspective view of one embodiment of a manifold with integrated spray nozzles for an anti-drive end of an electric generator.
FIG. 3B is a perspective view of another embodiment of a manifold with integrated spray nozzles for an anti-drive end of an electric generator illustrating a different level of overlap between the output of adjacent spray nozzles.
FIG. 4 is a cross-sectional view of an embodiment of a manifold with integrated spray nozzles mounted to a housing on the anti-drive end of an electric generator.
FIG. 5 is a perspective view of an embodiment of an oil inlet for a spray nozzle of a manifold for use in cooling the ends of stator coils at the anti-drive end of an electric generator.
FIG. 6 is a cross sectional view of an embodiment of a manifold with integrated nozzles for a drive end of an electric generator.
FIG. 7 is perspective view of an embodiment of a manifold with integrated nozzles for a drive end of an electric generator.
FIG. 8 is a cross sectional view of an embodiment of a manifold with integrated nozzles attached to a housing at a drive end of an electric generator.
FIG. 9 is perspective view of an embodiment of an oil inlet for a spray nozzle of a manifold for use in cooling the ends of stator coils at the drive end of an electric generator.
FIG. 10 is a cross-sectional view of one embodiment of an electric generator with first and second manifolds for cooling the end turns of stator coils of a stator according to one embodiment of the present invention.
FIG. 11 is a perspective an electric generator with internal passages for the cooling oil that are connected to manifolds for cooling the end turns of stator coils and an integrated oil feed assembly according to the teachings of the present invention.
FIGs 12A and 12B are cross-sectional views of two embodiments of portions of spray nozzles for use in manifolds for cooling end turns of stator coils of a stator according to the teachings of the present invention.
FIG. 13 is a flow chart of an embodiment of a process for cooling the end turns of stator coils in an electric generator.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized, and that logical, mechanical and electrical changes may be made without departing from the scope of the present invention. The following detailed description is, therefore, not to be taken in a limiting sense.

Embodiments of the present invention provide high power density electric generators with improved cooling of end turns of stator coils with low cost in terms of weight and size for the electric generator. To increase the heat transfer coefficient for cooling the end turns, the electric generator includes manifolds with spray nozzles in proximity to the end turns of the stator coils that spray a cooling fluid, e.g., oil or other cooling fluid such as Polyalphaolefin PAO, that is atomized to impinge directly on the end turns of the stator coils. The technical benefit generated by embodiments of this invention is significantly increased cooling capability of the electric generators resulting in higher output performance. Further, embodiments of this invention enable the continuous operation of a high power density generator, such as a one-megawatt generator, at its rated power.

### Generator with spray nozzles on manifolds to cool end turns of stator coils

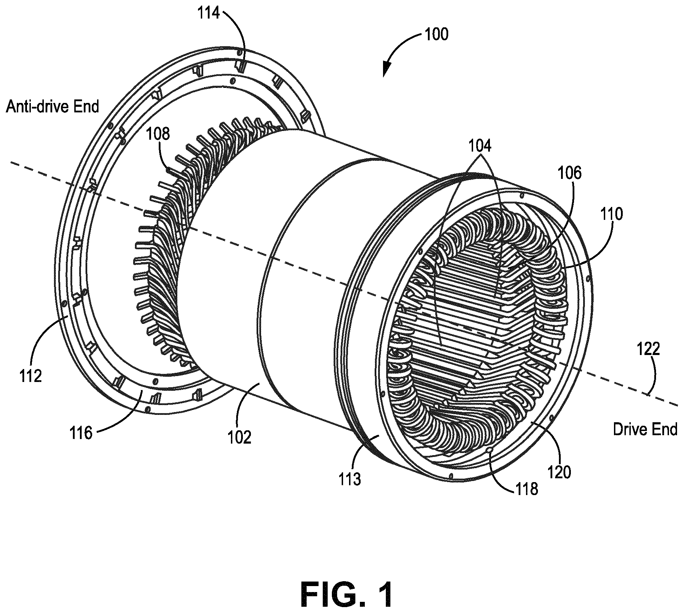

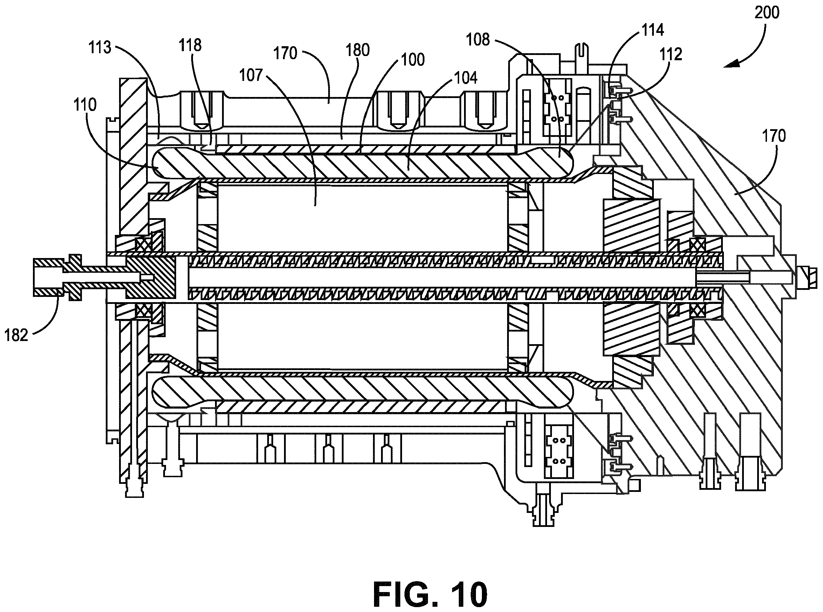

Figure 1 is a perspective view of one embodiment of a stator 100 for an electric generator. Stator 100 is used in a high power density generator in, for example, the 200 to 1,000 kW range. Stator 100 includes a plurality of stator coils 104 inserted in slots 106 of back-iron 102. Further, an embodiment of an electric generator using stator 100 is shown and described in more detail below with respect to Figure 10.

In existing generators, the end turns of the stator coils are difficult to cool without causing other issues with the operation of the electric generator as mentioned above. To overcome this problem, first and second cooling manifolds (or "manifolds") 112 and 113 are positioned in close proximity to end turns 108 and 110, respectively, of stator coils 104 of stator 100. In this embodiment, first end turns 108 and second end turns 110 are located at the anti-drive end and drive end of stator 100, respectively. First and second cooling manifolds 112 and 113 are configured with spray nozzles, described in more detail below, to cool first and second end turns 108 and 110 of stator coils 104, respectively.

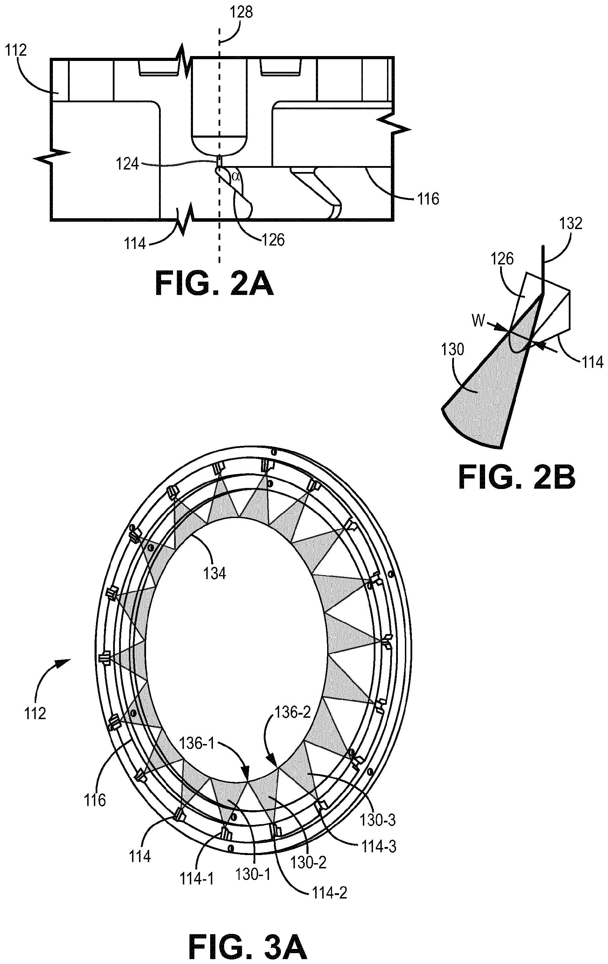

First manifold 112 includes a plurality of spray nozzles 114 formed on an inner surface 116 of manifold 112. For purposes of this specification, the term "inner" with respect to a surface means that the surface faces toward the interior of the electrical generator as opposed to facing outward from the generator. In one embodiment, inner surface 116 is perpendicular to central or drive axis 122 of the electric generator. In one embodiment, manifold 112 is formed using additive manufacturing techniques, and spray nozzles 114 are formed integrally with first manifold 112. Spray nozzles 114 are configured to spray cooling oil directly on the first end turns 108 of the stator coils 104. Advantageously, the spray nozzles 114 are designed to atomize the cooling oil to form a flat fan distribution that impacts the first end turns 108 of the stator coils 104 as described more fully below with respect to Figures 2A, 2B, 3A, 3B, 4, and 5.

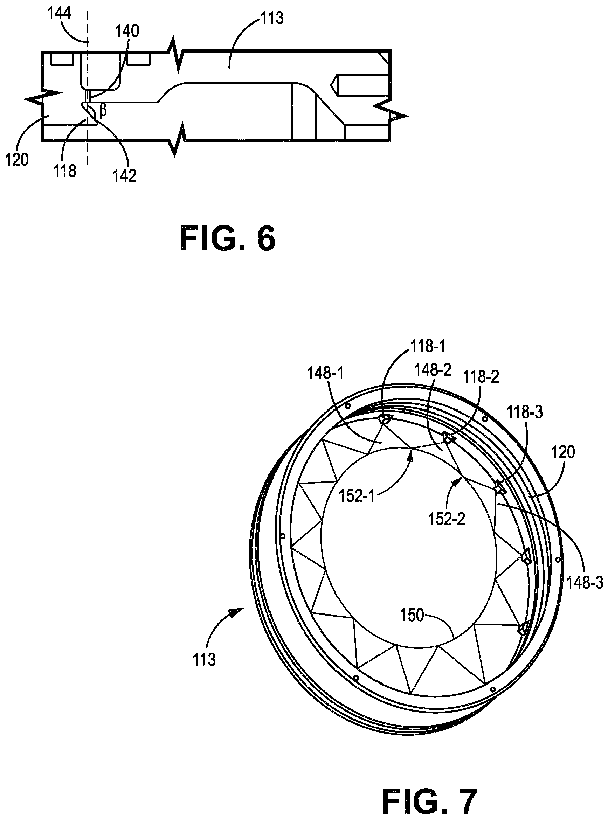

Second manifold 113 includes a plurality of spray nozzles 118 formed on an inner surface 120 of manifold 113. In one embodiment, inner surface 120 is parallel to central or drive axis 122 of the electric generator. In one embodiment, second manifold 113 is formed using additive manufacturing techniques, and spray nozzles 118 are formed integrally with second manifold 113. Spray nozzles 118 are configured to spray cooling oil directly on the second end turns 110 of the stator coils 104. Advantageously, the spray nozzles 118 are designed to atomize the cooling oil to form a flat fan distribution that impacts the second end turns 110 of the stator coils 104 as described more fully below with respect to Figures 6, 7, 8, and 9.

In operation, first and second manifolds 112 and 113 direct cooling oil at first and second end turns 108 and 110, respectively, of stator coils 104 to help reduce the heat in the electric generator incorporating stator 100. The first and second manifolds 112 and 113 do this by passing cooling oil through spray nozzles 114 and 118, respectively, at sufficiently high pressure to atomize the cooling oil and generator a plurality of overlapping, flat fan distributions that directly impinge on the end turns 108 and 110, respectively, of the stator coils 104. Advantageously, the cooling properties resulting from first and second manifolds 112 and 113 enables the generator to operate continuously at rated power even in the megawatt range.

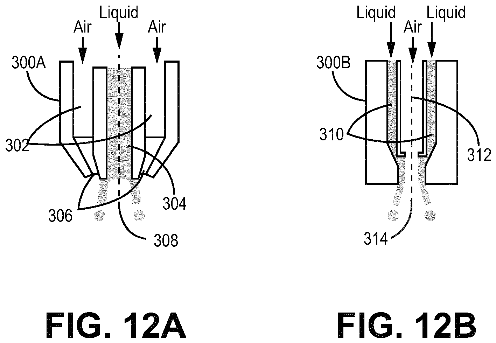

It is noted that manifolds 112 and 113 include nozzles that are formed on surfaces that are perpendicular and parallel to central or drive axis 122, respectively. In other embodiments, the nozzles of the various manifolds can be formed on surfaces of the manifold formed at other appropriate angles (e.g., 45 degrees) relative to the central or drive axis 122 so long as the nozzles are enabled to spray atomized oil on the end turns in such a way as to provide full coverage of the end turns. Further, in some embodiments, manifolds 112 and 113 are formed integral with other components of the electric generator. For example. Manifold 113 may be formed integral with a cooling sleeve that surrounds the stator of the electric generator (see, e.g., cooling sleeve 180 in Figure 10). Additionally, one or both of manifolds 112 and 113 may be formed integral with a housing of the electric generator. Finally, as illustrated in Figures 12A and 12B and described in more detail below, the spray nozzles of the manifolds may receive air in addition to oil or other cooling fluid to further improve the atomization of the cooling fluid and thus improve the heat transfer provided by the manifolds and the spray nozzles.

### Manifold for cooling Anti-Drive ends of stator coils

Embodiments of first manifold 112 for cooling the anti-drive ends of stator coils 104 with spray nozzles 114 is illustrated in Figures 2A, 2B, 3A, 3B, 4, and 5. Figures 2A and 2B illustrate cross section and perspective views of spray nozzle 114, respectively. Spray nozzles 114 are formed on inner surface 116 of first manifold 112. It is noted that when the first manifold 112 is installed in an electric generator, the inner surface 116 is parallel with a central or drive axis (122) of the electric generator.

As shown in Figure 2A, spray nozzle 114 includes a channel 124 that receives the cooling oil under appropriate temperature and pressure for cooling end turns 108 of stator coils 104. Channel 124 has a diameter that is selected to promote atomization of the cooling oil when the oil passes through channel 124 and impinges on surface 126. Surface 126 forms an angle, α, with the central axis 128 of channel 124. The angle, α, is selected to direct the atomized oil toward the end turns 108 of stator coil 104.

As shown best in Figures 2B and 3A, the oil 132 exits channel 124 and is atomized and fans out on surface 126 to form a flat fan distribution 130. The size of the flat fan distribution 130 is controlled, in part, by the width, W, of the end of the surface 126 closest to the end turns 108 of stator coils 104 and the angle, α, of surface 126 relative to channel 124.

Further, as illustrated in Figure 3A, flat fan distributions 130 from adjacent spray nozzles 114 overlap such that the flat fan distributions form a circle 134 of oil that covers the end turns 108 of the stator coils 104. For example, spray nozzles 114-1, 114-2, and 114-3 generate flat fan distributions 130-1, 130-2, and 130-3, respectively. The flat fan distributions 130-1 and 130-2 overlap at circle 134 as indicated at 136-1 and the flat fan distributions 130-2 and 130-3 overlap at circle 134 as indicated at 136-2. Advantageously, this circle 134 of overlapping flat fan distributions of atomized oil provides the benefit of full coverage of the end turns that significantly increases the heat transfer coefficient and heat extraction for the electric generator.

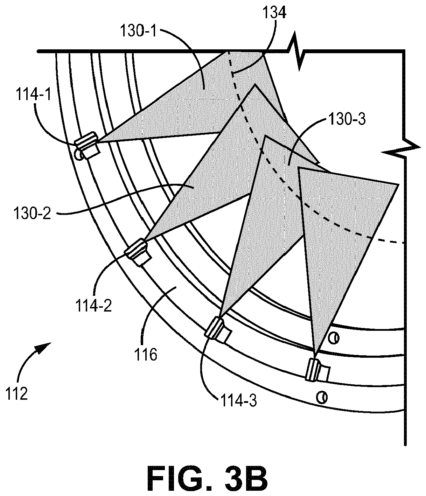

It is noted that there is a relatively small overlap illustrated for adjacent flat fan distributions 130 in Figure 3A. In other embodiments, the overlap can be more substantial such as show in Figure 3B. As illustrated in Figure 3B, for example, flat fan distributions from spray nozzles 114-1 and 114-3 overlap substantially at circle 134 with the flat fan distribution of spray nozzle 114-2. Thus, the amount of overlap in flat fan distributions in a particular instantiation of a manifold is chosen to meet the heat extraction needs of a particular electric generator.

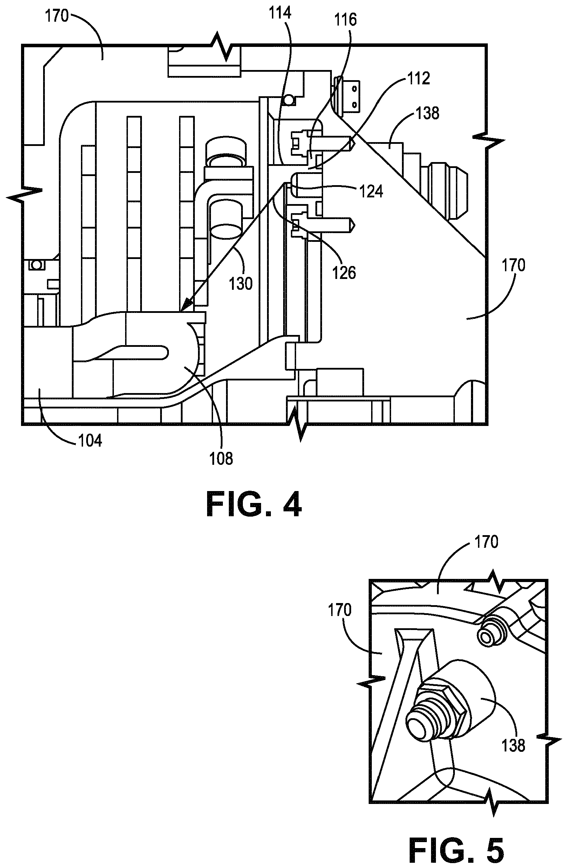

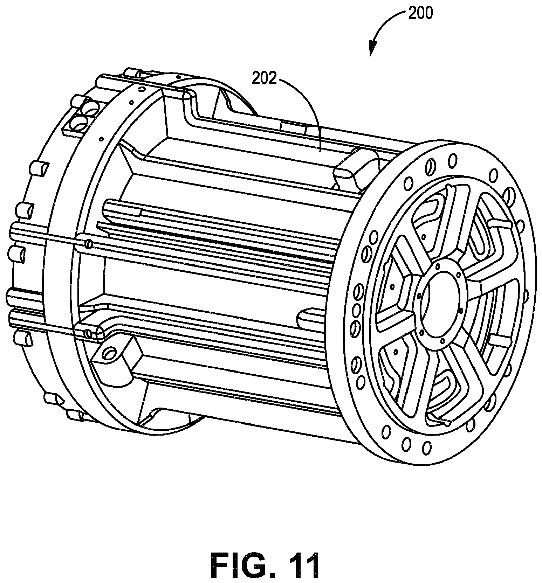

Figures 4 and 5 show the first manifold 112 installed in an electric generator. As shown, first manifold 112 is connected to housing 170 of the electric generator at the anti-drive end of the electric generator. Spray nozzles 114 are positioned on surface 116 of first manifold 112 to direct their flat fan distributions 130 at end turns 108 of stator coils 104. The oil that forms these flat fan distributions is provided to channel 124 of spray nozzles 114 through oil inlet 138 that is attached to an exterior surface of manifold 112 to provide appropriate temperature, flow and pressure in the oil for heat extraction. It is noted that, as shown in Figure 11 described below, oil can be provided to the various manifolds through internal passages for the cooling oil that are connected to the manifolds as shown in Figure 11.

### Manifold for cooling Drive ends of stator coils

One embodiment of second manifold 113 for cooling the drive ends of stator coils 104 with spray nozzles 118 is illustrated in Figures 6, 7, 8, and 9. Figure 6 illustrates a cross section view of spray nozzle 118. Spray nozzle 118 is formed on inner surface 120 of second manifold 113. It is noted that when the second manifold 113 is installed in an electric generator, the inner surface 120 is parallel with a central or drive axis (122) of the electric generator.

Spray nozzle 118 includes a channel 140 that receives the cooling oil under appropriate temperature and pressure for cooling end turns 110 of stator coils 104. Channel 140 has a diameter that is selected to promote atomization of the cooling oil when the oil passes through channel 140 and impinges on surface 142. Surface 142 forms an angle, β, with the central axis 144 of channel 140. The angle, β, is selected to direct the atomized oil toward the end turns 110 of stator coil 104.

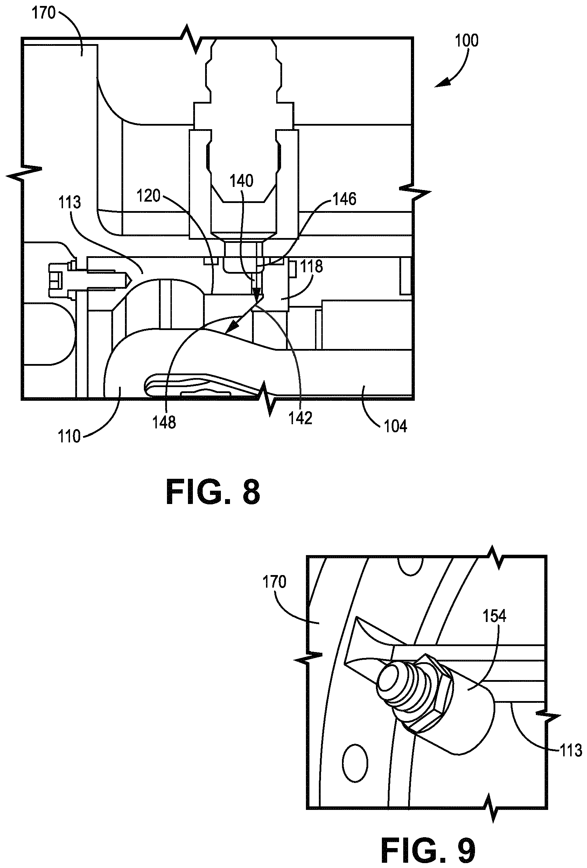

As shown best in Figures 7 and 8, the oil 146 exits channel 140 and is atomized and fans out on surface 142 to form a flat fan distribution 148. The size of the flat fan distribution 148 is controlled, in part, by the width of the end of the surface 142 closest to the end turns 110 of stator coils 104 and the angle, β, of surface 142 with central axis 144. Further, as illustrated in Figure 7, flat fan distributions 148 from adjacent spray nozzles 118 overlap such that the flat fan distributions form a circle 150 of oil that covers the end turns 110 of the stator coils 104. For example, spray nozzles 118-1, 118-2, and 118-3 generate flat fan distributions 148-1, 148-2, and 148-3, respectively. The flat fan distributions 148-1 and 148-2 overlap at circle 150 as indicated at 152-1 and the flat fan distributions 148-2 and 148-3 overlap at circle 150 as indicated at 152-2. Advantageously, this circle 150 of overlapping flat fan distributions of atomized oil provides the benefit of full coverage of the end turns that significantly increases the heat transfer coefficient and heat extraction for the electric generator. It is noted that the amount of overlap of flat fan distributions for second manifold 113 can also be varied to meet the heat removal needs of a specific electric generator in a similar manner as shown and described above with respect to Figure 3B.

Figures 8 and 9 show the second manifold 113 installed in the electric generator. As shown, second manifold 113 is connected to housing 170 of the electric generator at the drive end of the electric generator. Spray nozzles 118 are positioned on surface 120 of second manifold 113 to direct their flat fan distributions 148 at end turns 110 of stator coils 104. The oil that forms these flat fan distributions is provided to channel 140 of spray nozzles 118 through oil inlet 154 that is attached to an exterior surface of second manifold 113 to provide appropriate temperature, flow and pressure in the oil for heat extraction.

### Integration of manifolds into an electric generator

Figure 10 is a cross section of one embodiment of an electric generator indicated generally at 200 that includes manifolds 112 and 113 for cooling end turns 108 and 110 of stator coils 104 of a stator 100 of the electric generator 200 according to one embodiment of the present invention. Stator 100 includes a cooling sleeve 180 that surrounds the stator. In one embodiment, cooling sleeve 180 is formed as described in co-pending application serial number 17/860,675, filed on July 8, 2022 (the `675 Application). The `675 Application is incorporated herein by reference. Additionally, electric generator 200 also includes rotor 107 disposed within stator 100. Further, electric generator 200 also includes a drive shaft 182 that causes rotor 107 to rotate within electric generator 200.

As described in more detail above, manifolds 112 and 113 include spray nozzles 114 and 118, respectively, to cool the end turns 108 and 110 of stator coils 104. Electric generator 200 is encased by housing 170.

Embodiments of electric generator 200 include components of the cooling mechanism that are formed by additive manufacturing. For example, in some embodiments, manifolds 112 and 113 are formed as separate components using additive manufacturing and then installed in electric generator 200 as shown in Figure 10. In other embodiments, cooling sleeve 180 is also formed by additive manufacturing. Further, in some embodiments, cooling sleeve 180 and manifold 113 are formed as a single unit. And, in yet further embodiments, one or both of manifolds 112 and 113 are formed integral with housing 170.

Figure 11 is a perspective an electric generator 200 with internal manifolds for cooling the end turns of stator coils. Advantageously, electric generator 200 also includes internal passages of an integrated oil feed assembly for providing cooling fluids to the internal manifolds according to the teachings of the present invention. In this embodiment, oil is fed to the internal manifolds for cooling the end turns of the stator coils through the integrated oil feed assembly 202. Oil feed assembly 202 receives oil from an external source and routes the oil to the first and second manifolds such as first and second manifolds 112 and 113 as shown and described above.

### Improved Atomization using air in combination with cooling liquid

Figures 12A and 12B are cross-sectional views of two embodiments of portions of spray nozzles for use in manifolds for cooling end turns of stator coils of a stator according to the teachings of the present invention. Using air or another gas to atomize the sprayed oil can increase the efficiency of this cooling system and is a feature that can improve the end-turn coverage and penetration with oil. In the embodiment shown in Figure 12A, nozzle 300A includes a central channel 304 that receives a cooling liquid such as oil. Additionally, nozzle 300A also includes an additional channel 302 that surrounds central channel 304. The additional channel 302 receives air. Nozzle 300A passes the air through opening 306 while the cooling liquid passes though opening 308. This use of air further improves the atomization of the cooling liquid as it exits nozzle 300A. In the embodiment of Figure 12B, nozzle 300B include a central channel 312 that is configured to receive air. Central channel 312 is surrounded by outer channel 310 that is configured to receive the cooling liquid, e.g., oil. The cooling liquid exits nozzle 300B at opening 314. The use of air in central channel 312 produces improved atomization of the cooling liquid that exits through opening 314. It is understood that the nozzles used in the manifolds for cooling the end turns of stator coils can be constructed in other ways to use air to improve the atomization of the cooling liquid. The embodiments shown and described with respect to Figures 12A and 12B are shown by way of example and not by way of limitation.

### Method for cooling ends of stator coils

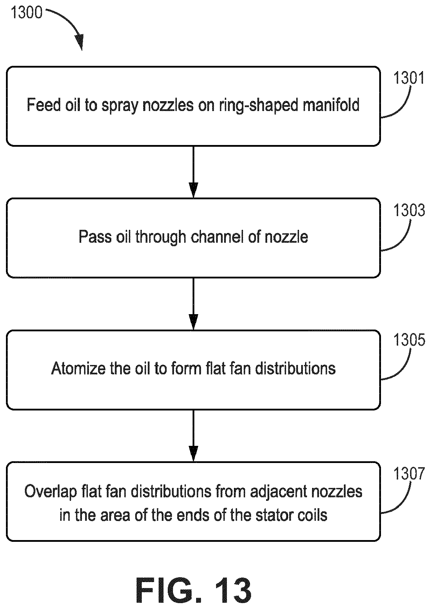

Figure 13 is flow chart of an embodiment of a process, indicated generally at 1300, for cooling the end turns of stator coils in a stator of an electric generator. The process begins at block 1301 by feeding oil or other cooling fluid to spray nozzles on a ring-shaped manifold. In one embodiment, oil is fed to a first manifold at an anti-drive end of the electric generator, while oil is fed to a second manifold at a drive end of the electric generator. The oil is fed to the manifolds at a temperature and pressure that is conducive with atomization of the oil in the nozzles. Further, the spray nozzles are positioned to provide 360-degree coverage of the end turns of the stator coils at both the drive and anti-drive ends of the electric generator.

At block 1303, oil that was fed to the spray nozzles passes through a channel of each nozzle located on both manifolds. The diameter of the channel of each nozzle is chosen to enable atomization of the oil to provide full coverage of the end turns of the stator coils. Thus, the channel diameter, in conjunction with other features of the spray nozzles, maintains the appropriate temperature, pressure and flow for the atomization process to occur.

At block 1305, the oil that passes through the channel and impinges on a surface of the spray nozzle atomizes and forms a flat fan distribution. The angle of the surface relative to the channel and the width of the surface further impact the atomization and fanning out of the oil toward the end turns of the stator coils. In one embodiment, the oil that impacts the surface fans out to form a flat fan distribution that is directed toward the end turns of the stator coils.

At block 1307, the flat fan distributions of oil from adjacent spray nozzles overlap in the area of the end turns of the stator coils. This overlap assures full coverage of the end turns of the stator coils and improves the heat transfer and heat removal from the electric generator.

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a generator. The generator includes a rotor; a stator with a plurality of stator coils surrounding the rotor; a housing, containing the rotor and the stator with the plurality of stator coils, the housing having a drive-end and an anti-drive-end; a first manifold disposed at the drive-end of the housing and having a first plurality of spray nozzles, wherein each of the first plurality of spray nozzles includes a first channel having a first diameter and a first surface having a selected first width and first angle wherein the first channel and the first surface are configured to spray oil on first end turns of the plurality of stator coils; and a second manifold disposed at the anti-drive-end of the housing and having a second plurality of spray nozzles, wherein each of the second plurality of spray nozzles includes a second channel having a second diameter and a second surface having a selected second width and second angle wherein the second channel and the second surface are configured to spray oil on second end turns of the plurality of stator coils.

Example 2 includes the generator of example 1, wherein the first manifold comprises a ring having an inner surface configured to be parallel to a drive axis of the generator, wherein the first plurality of spray nozzles are formed on the inner surface and around a perimeter of the ring and the first channel and the first surface of each spray nozzle are configured to spray oil on the first end turns of the plurality of stator coils with a flat fan distribution.

Example 3 includes the generator of example 2, wherein the flat fan distribution of each spray nozzle of the first plurality of spray nozzles overlaps with the flat fan distribution of adjacent ones of the first plurality of spray nozzles.

Example 4 includes the generator of any of examples 2 and 3, wherein the first channel of each of the first plurality of spray nozzles is configured to receive and pass oil under pressure toward an interior of the generator; and wherein the first surface of each of the first plurality of spray nozzles is configured to form an angle with a central axis of the first channel such that the oil atomizes, fans out and is directed toward the first end turns of the plurality of stator coils.

Example 5 includes the generator of example 4, wherein each spray nozzle in configured to receive air in addition to the oil.

Example 6 includes the generator of any of examples 4 and 5, wherein the first plurality of spray nozzles are formed integral with the first manifold.

Example 7 includes the generator of example 6, wherein the first manifold is formed integral with a cooling sleeve that encloses the stator.

Example 8 includes the generator of any of examples 1 to 7, wherein the second manifold comprises a ring having an inner surface that is perpendicular with a drive axis of the generator, wherein the second plurality of spray nozzles are formed on the inner surface and are spaced apart and the second channel and the second surface of each spray nozzle of the second plurality of spray nozzles are configured to spray oil on the second end tuns of the plurality of stator coils with a flat fan distribution.

Example 9 includes the generator of example 8, wherein the flat fan distribution of each spray nozzle of the second plurality of spray nozzles overlaps with the flat fan distribution of adjacent ones of the second plurality of spray nozzles.

Example 10 includes s manifold for cooling the end turns of stator coils of a stator in an electric generator. The manifold includes: a ring having a first surface; a plurality of spray nozzles formed integral with the ring and extending from the first surface; each spray nozzle of the plurality of spray nozzles comprising: a channel having a diameter and configured to receive oil, and a second surface having a selected width and an angle, wherein the channel and the second surface are configured to spray the oil on first end turns of the stator coils.

Example 11 includes the manifold of example 10, wherein the first surface of the ring is configured to be placed one of parallel, perpendicular or at another angle relative to a drive axis of the electric generator.

Example 12 includes the manifold of any of examples 10 and 11, wherein the channel of each spray nozzle also receives air in addition to the oil.

Example 13 includes the manifold of any of examples 10 to 12, wherein the second surface is positioned at an angle with respect to a central axis of the channel.

Example 14 includes the manifold of any of examples 10 to 13, wherein the second surface comprises a trapezoidal shape with a narrow end adjacent to the first surface of the ring.

Example 15 includes the manifold of any of examples 10 to 14, wherein the channel and the second surface are configured to atomize the oil and form a flat fan distribution.

Example 16 includes the manifold of example 15, wherein the flat fan distribution of each of the plurality of spray nozzles overlaps with the flat fan distribution of adjacent ones of the plurality of spray nozzles.

Example 17 includes the manifold of any of examples 10 to 16, wherein the ring is formed integral with a cooling sleeve that surrounds the stator.

Example 18 includes a method for cooling end turns of stator coils in an electric generator. The method includes: feeding oil to a plurality of spray nozzles spaced out on a surface of a ring-shaped manifold configured to be coupled to a housing of the electric generator; passing the oil through a channel in each of the plurality of spray nozzles; atomizing the oil to form a flat fan distribution extending from each of the plurality of spray nozzles wherein each of the plurality of spray nozzles are configured to cause the flat fan distribution to overlap with flat fan distributions of adjacent ones of the plurality of spray nozzles on the surface of the manifold to provide oil in an area of the end turns of the stator coils.

Example 19 includes the method of example 18, wherein atomizing the oil to form the flat fan distribution comprises directing the oil from the channel toward an angled surface, wherein an angle of the angled surface relative to the channel directs the flat fan distribution toward the end turns of the stator coils.

Example 20 includes the method of any of examples 18 and 19, wherein feeding oil to a plurality of spray nozzles comprises feeding oil and air to a plurality of spray nozzles on a manifold that is configured for either a drive end or an anti-drive end of the electric generator.

## Claims

1. A generator (200), comprising:
a rotor (107);
a stator (100) with a plurality of stator coils (104) surrounding the rotor;
a housing (170), containing the rotor and the stator with the plurality of stator coils, the housing having a drive-end and an anti-drive-end;
a first manifold (113) disposed at the drive-end of the housing and having a first plurality of spray nozzles (118), wherein each of the first plurality of spray nozzles includes a first channel (140) having a first diameter and a first surface (142) having a selected first width and first angle wherein the first channel and the first surface are configured to spray oil on first end (110) turns of the plurality of stator coils; and
a second manifold (112) disposed at the anti-drive-end of the housing and having a second plurality of spray nozzles (114), wherein each of the second plurality of spray nozzles includes a second channel (124) having a second diameter and a second surface (126) having a selected second width and second angle wherein the second channel and the second surface are configured to spray oil on second end turns (108)of the plurality of stator coils.

2. The generator of claim 1, wherein the first manifold comprises a ring having an inner surface (120) configured to be parallel to a drive axis (122) of the generator, wherein the first plurality of spray nozzles are formed on the inner surface and around a perimeter of the ring and the first channel and the first surface of each spray nozzle are configured to spray oil on the first end turns of the plurality of stator coils with a flat fan distribution (130).

3. The generator of claim 2, wherein the flat fan distribution of each spray nozzle of the first plurality of spray nozzles overlaps with the flat fan distribution of adjacent ones of the first plurality of spray nozzles.

4. The generator of claim 2, wherein the first channel of each of the first plurality of spray nozzles is configured to receive and pass oil under pressure toward an interior of the generator; and
wherein the first surface of each of the first plurality of spray nozzles is configured to form an angle with a central axis of the first channel such that the oil atomizes, fans out and is directed toward the first end turns of the plurality of stator coils.

5. The generator of claim 4, wherein each spray nozzle in configured to receive air in addition to the oil.

6. The generator of claim 4, wherein the first plurality of spray nozzles are formed integral with the first manifold.

7. The generator of claim 6, wherein the first manifold is formed integral with a cooling sleeve (180) that encloses the stator.

8. The generator of claim 1, wherein the second manifold comprises a ring having an inner surface that is perpendicular with a drive axis of the generator, wherein the second plurality of spray nozzles are formed on the inner surface and are spaced apart and the second channel and the second surface of each spray nozzle of the second plurality of spray nozzles are configured to spray oil on the second end tuns of the plurality of stator coils with a flat fan distribution.

9. A method for cooling end turns of stator coils in an electric generator, the method comprising:
feeding oil to a plurality of spray nozzles spaced out on a surface of a ring-shaped manifold configured to be coupled to a housing of the electric generator (1301);
passing the oil through a channel in each of the plurality of spray nozzles (1303);
atomizing the oil to form a flat fan distribution extending from each of the plurality of spray nozzles (1305) wherein each of the plurality of spray nozzles are configured to cause the flat fan distribution to overlap with flat fan distributions of adjacent ones of the plurality of spray nozzles on the surface of the manifold to provide oil in an area of the end turns of the stator coils (1307).

10. The method of claim 9, wherein atomizing the oil to form the flat fan distribution comprises directing the oil from the channel toward an angled surface, wherein an angle of the angled surface relative to the channel directs the flat fan distribution toward the end turns of the stator coils.
